**Europäisches Patentamt**

**European Patent Office**

**Office européen des brevets**

(19)

(11) Publication number: **0 052 012**
**A1**

# EUROPEAN PATENT APPLICATION

(12)

(21) Application number: **81305330.3**

(22) Date of filing: **10.11.81**

(51) Int. Cl.³: **B 60 K 23/08**

(30) Priority: **11.11.80 JP 158352/80**

(43) Date of publication of application: **19.05.82**
**Bulletin 82/20**

(84) Designated Contracting States: **CH DE FR GB LI SE**

(71) Applicant: **FUJI JUKOGYO KABUSHIKI KAISHA,
7-2 Nishishinjuku 1-chome Shinjuku-ku, Tokyo (JP)**

(72) Inventor: **Satoh, Tetsuo, 58-39, Higashihoncho, Ohta-shi
Gunma-Pref. (JP)**
Inventor: **Ohgami, Masaaki, 2-5-10-203, Yahatacho,
Musashino-shi Tokyo (JP)**
Inventor: **Ogata, Shoji, 389, Takaracho, Ohta-shi
Gunma-Pref. (JP)**

(74) Representative: **Batchellor, John Robert et al,
BATCHELLOR, KIRK & EYLES 2 Pear Tree Court
Farringdon Road, London EC1R 0DS (GB)**

(54) **Indication system for a four-wheel drive vehicle.**

(57) An internal combustion engine comprises a transmission for transmitting a power from the engine to two main driving wheels, a clutch for selectively transmitting the power to another two wheels, a selection lever for engaging said clutch, compares the speeds of the two pairs of wheels and gives a signal when the wheel slippage occurs, to warn the driver that four-wheel drive should be engaged. The indication system comprises speed detectors (23, 27, 28 and 22, 29, 30) which detects the speeds of the main driving wheels and the other two wheels. An electric circuit (32–38) compares the speeds and illuminates a warning lamp (18) when the difference between the speeds exceeds a predetermined level, whereby slippage of the main driving two-wheel is detected.

1

# INDICATION SYSTEM FOR A FOUR-WHEEL DRIVE VEHICLE

The present invention relates to a system for indicating the necessity to engage four-wheel drive on a 2/4-wheel drive vehicle.

In a 2/4-wheel drive vehicle, a clutch device is provided to select either two-wheel drive or four-wheel drive. The clutch device is engaged by the manual operation of a selection lever.

The vehicle is advantageously driven with four-wheel drive engaged in slippery conditions such as are encountered in snow and ice. In a conventional four-wheel drive vehicle, the operator manipulates the selection lever when he judges the necessity of the four-wheel drive. The judgement of the operator may not always be right and moreover the operator must take trouble to judge the road conditions.

An object of the present invention is to provide a system for a 2/4-wheel drive vehicle which automatically gives a signal for operating the clutch selection lever to change the transmission from two-wheel drive to four-wheel drive.

According to the present invention, an indication for a 2/4-wheel drive vehicle which has an internal combustion engine, a transmission for transmitting power from the engine to two main driving wheels, a clutch for selectively transmitting the power additionally to another two wheels, and selection means

2

for engaging the clutch, comprises means for selecting slippage of the two main driving wheels and an electric circuit responsive to a signal from the detecting means for indicating when slippage occurs.

The indicating circuit may illuminate a warning light, or may operate an automatic control for engaging 4-wheel drive.

Embodiments of the invention will now be described with reference to the accompanying drawings in which:

Figure 1 is a plan view showing a vehicle having a 2/4-wheel driving system;

Figure 2 is a sectional view showing a speed detector; and

Figure 3 is an indication system used on the vehicle.

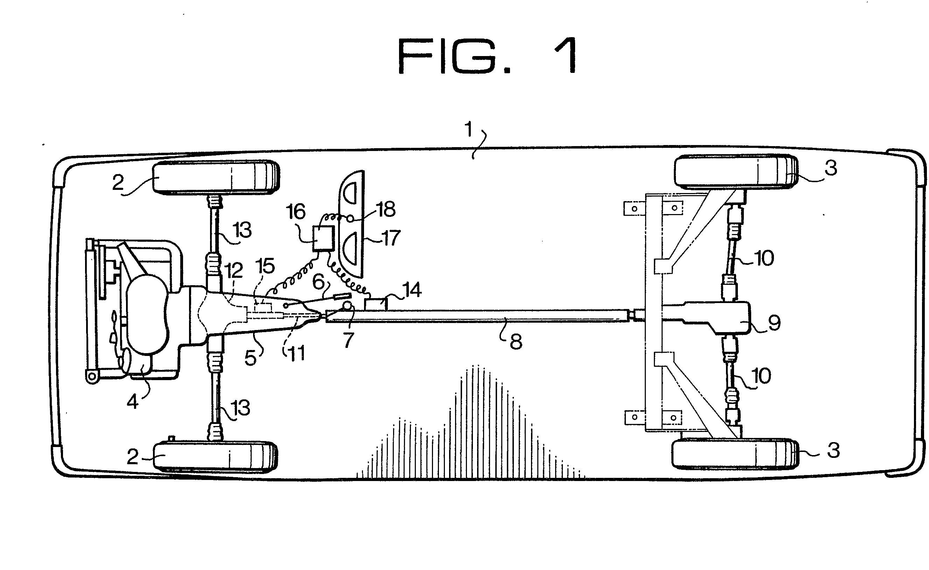

Referring to Figure 1, reference numeral 1 designates a body of a vehicle, 2 are front wheels and 3 are rear wheels. An engine 4 is mounted on the body 1 at the front. The power of the engine is transmitted through a gear box 5, either to the front wheels or to both the front and the rear wheels by selective engagement of a clutch in the transmission 5. Gear change is effected by means of a gear lever 6. The clutch in the gear box 5 is engaged by operating a shift lever 7 in order to transmit power additionally to the rear wheels 3. The output of the gear box 5 is transmitted to the front wheels 2 through a shaft 11, a

3

front differential 12 and front axles 13. The power transmission to the rear wheels 3 comprises a propeller shaft 8 extending from the gear box 5, a rear differential 9 and rear axles 10.

In order to detect the rotational speeds of the front and rear wheels 2, 3, a front-wheel speed detector 15 is mounted adjacent to the shaft 11 and a rear-wheel speed detector 14 is mounted adjacent to the propeller shaft 8. The outputs of the two speed detectors 14 and 15 are connected to a judgement device 16, the output of which is connected to a lamp 18 on an instrument panel 17 to give a warning of the necessity to engage four-wheel drive.

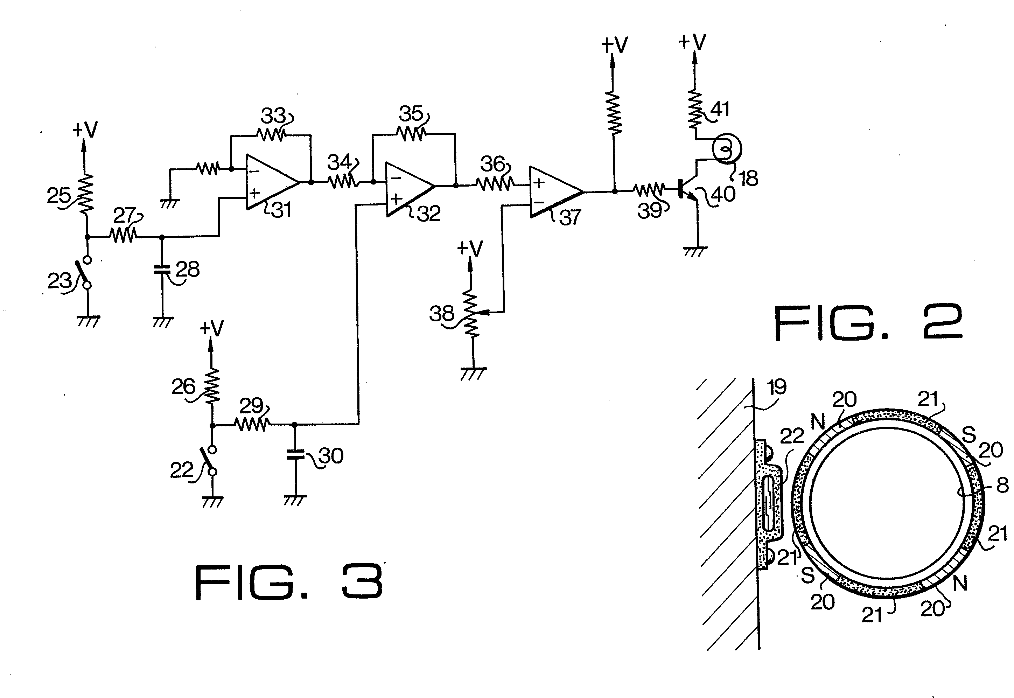

One of the speed detectors 14, 15 is shown in Figure 2. A number of permanent magnets 20 are circumferentially secured on the propeller shaft 8 (or on the shaft 11). Magnets 20 are separated from each other by synthetic resin 21 secured on the shaft. For the rear speed detector, a reed switch 22 is provided on a support 19 formed on the body 1 and is positioned in the vicinity of the magnets 20 with a slight gap. A second reed switch is similarly provided adjacent the magnets on shaft 11.

Referring to Figure 3, the reed switch for the front-wheel speed detector 15 is indicated at 23 and is connected to a voltage supply through a resistor 25. The reed switch 22 for the rear-wheel speed detector 14 and a resistor 26 are connected in series to the voltage supply. A first integrator comprising a resistor 27 and a capacitor 28 is connected to the resistor 25 and its output is connected to a non-inverting input of an operational amplifier 31. Similarly, a second integrator comprising a resistor 29 and capacitor 30 is connected to the resistor 26 and to non-inverting input of an operational amplifier 32. The output of the operational amplifier 31 is connected to the inverting input thereof through a resistor 33 and to the inverting input of the operational amplifier 32 through a resistor 34. The output of the operational amplifier 32 is connected to the input thereof through a resistor 35 and to non-inverting input of a comparator 37 through a resistor 36. The inverting input of the comparator 37 is connected to ground through a variable resistor 38. The output of the comparator 37 is connected to the base of a transistor 40 through a resistor 39. The lamp 18 and a resistor 41 are connected in series to the collector of the transistor 40.

During two-wheel drive, engine 4 drives front wheels 2 through the gear box 5, shaft 11 and front axles 13. The speeds of front and rear wheels are detected by speed detectors 14 and 15. In each speed detector, the reed switch 22 or 23 is periodically closed by magnets 20 at a repetition rate in accordance with the speed of the wheels. Accordingly, the output of the associated integrator 27, 28 or 29, 30 varies in dependency on the speed of the wheels. The output at
the capacitor 28 is applied to the operational
amplifier 32 through the amplifier 31 and the output at
the capacitor 30 is also applied to the operational
amplifier 32, where the speed of the front wheels is
compared with that of the rear wheels. The output of
the operational amplifier 32 is applied to the
comparator for comparing it with a reference voltage by
the resistor 38. When the front wheels slip, their
speed increases relative to the speed of the undriven
rear wheels and the output voltage of the operational
amplifier 32 increases, causing the output voltage of
the comparator 37 to increase. When the output of the
comparator 37 exceeds a predetermined level, determined
by variable resistor 38, the transistor 40 is turned
on, and a lamp 18 is illuminated. Thus, the need to
the four-wheel drive is indicated by the lamp 18. When
the selection lever 7 is manipulated by the operator in
response to the warning, the two-wheel drive through
front wheels 2 is changed to four-wheel drive through
the front and rear wheels.

From the foregoing, it will be understood
that the system of the present invention indicates the
necessity of the four-wheel driving. Thus, in
accordance with the system, the operator can drive the
vehicle without special attention to the road
condition. If desired the output of the comparator 37
may be utilised to operate the clutch automatically to

change from two-wheel to four-wheel drive.

Claims:

1.　　　　An indication system for a 2/4-wheel drive vehicle, which has an internal combustion engine (4), a transmission (5) for transmitting power from the engine to two main driving wheels (2), a clutch for selectively transmitting the power additionally to another two wheels, and selection means (7) for engaging the clutch, the indication system comprising means (22-38) for detecting slippage of the two main driving wheels (2), and an electric circuit (18, 39-41) responsive to a signal from the detecting means for indicating when slippage occurs.

2.　　　　An indication system for a 2/4-wheel drive vehicle in accordance with claim 1, wherein the slippage detecting means comprises a first speed detector (23, 27, 28) for detecting the speed of the main driving wheels (2), a second speed detector (22, 29, 30) for detecting the speed of the other two wheels (3), and a comparison circuit (32, 37, 38) for comparing the two speeds and for producing a signal for operating the indicating circuit when the difference between the speeds exceeds a predetermined level.

3.　　　　An indication system for a 2/4-wheel drive vehicle in accordance with claim 1 or claim 2, in which the indicating circuit includes a lamp (18) which is illuminated when slippage occurs as a warning that four-wheel drive should be engaged.

# FIG. 1

FIG. 2

FIG. 3

# EUROPEAN SEARCH REPORT

00520012
Application number

EP 81 30 5330

European Patent Office

## DOCUMENTS CONSIDERED TO BE RELEVANT

| Category | Citation of document with indication, where appropriate, of relevant passages | Relevant to claim |
|---|---|---|
| Y/X | FR - A - 2 311 961 (EATON CORP.)<br><br>* figure 3, claim 1, page 9; claims 6,7,8; pages 10,11 *<br><br>-- | 1,2 |
| Y/X | PATENTS ABSTRACTS OF JAPAN, vol. 5, no. 18, February 3, 1981, page 690 M 53<br>& JP - A - 55 148 622 (KUBOTA TEKKO K.K.)(November 19, 1980)<br><br>* the whole document *<br><br>-- | 1,2 |
| Y/X | PATENTS ABSTRACTS OF JAPAN, vol. 5, no. 25, February 14, 1981, page 697 M 55<br>& JP - A - 55 152 624 (KUBOTA TEKKO K.K.)(November 28, 1980)<br><br>* the whole document *<br><br>-- | 1,2 |
| Y/X | US - A - 3 845 671 (SHARP)<br><br>* the whole document *<br><br>-- | 1,2 |
| Y | US - A - 4 236 595 (BECK)<br><br>* abstract *<br><br>-- | 1,2 |
| Y | US - A - 3 484 009 (BARBEE)<br><br>* figure 2 *<br><br>-------- | 3 |

### CLASSIFICATION OF THE APPLICATION (Int. Cl. 3)

B 60 K 23/08

### TECHNICAL FIELDS SEARCHED (Int.Cl. 3)

B 60 K 17/34
23/08
23/00

### CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | |
|---|---|---|
| Place of search<br>The Hague | Date of completion of the search<br>05-02-1982 | Examiner<br>ONILLON |

EPO Form 1503.1  06.78